(19) Europäisches Patentamt
European Patent Office
Office européen des brevets

(11) Veröffentlichungsnummer: **0 501 217 A2**

(12) # EUROPÄISCHE PATENTANMELDUNG

(21) Anmeldenummer: **92102225.7**

(51) Int. Cl.⁵: **C08G 75/02**

(22) Anmeldetag: **11.02.92**

(30) Priorität: **23.02.91 DE 4105748**

(43) Veröffentlichungstag der Anmeldung:
**02.09.92 Patentblatt 92/36**

(84) Benannte Vertragsstaaten:
**BE DE FR GB IT**

(71) Anmelder: **BAYER AG**

**W-5090 Leverkusen 1 Bayerwerk(DE)**

(72) Erfinder: **Arlt, Wolfgang, Dr.**
**Schönwasserstrasse 230c**
**W-4150 Krefeld(DE)**
Erfinder: **Alewelt, Wolfgang, Dr.**
**Stratumer Feld 17**
**W-4150 Krefeld(DE)**
Erfinder: **Meyer, Karl-Heinrich, Dr.**
**Deswatinesstrasse 89**
**W-4150 Krefeld(DE)**
Erfinder: **Schmidt, Manfred, Dr.**
**Erich-Klausener-Strasse 37**
**W-4150 Krefeld(DE)**
Erfinder: **Tresper, Erhard, Dr.**
**Moerser Strasse 394**
**W-4150 Krefeld(DE)**
Erfinder: **Eisermann, Wolfgang, Dr.**
**Auf der Krone 22**
**W-4000 Düsseldorf 31(DE)**

(54) **Verfahren zur Herstellung von Polyarylensulfiden.**

(57) Die Erfindung betrifft ein vereinfachtes Verfahren zur Herstellung von Polyarylensulfiden verbesserter Produktqualität aus Alkalisulfid und Dihalogenaromaten, wobei das Alkalisulfid in situ hergestellt und umgesetzt wird.

EP 0 501 217 A2

Die Erfindung betrifft ein vereinfachtes Verfahren zur Herstellung von Polyarylensulfiden verbesserter Produktqualität aus Alkalisulfid und Dihalogenaromaten, wobei das Alkalisulfid in situ hergestellt und umgesetzt wird.

Polyarylensulfide und Verfahren zu ihrer Herstellung sind bekannt, z.B. US-A 33 54 129, EP-A 171 021. Dies sind u.a. Umsetzungen unter hohen Drücken. Bekanntlich bereitet dies konstruktive und verfahrenstechnische Probleme, die z.B. mit der Handhabung von Druck bei korrosiven Medien und hoher Temperatur wie in der PPS-Synthese verbunden sind. Weitere spezifische Nachteile ergeben sich aus den jeweiligen Verfahrensvariationen, wie mehrstufige Reaktionsführung, Einsatz erheblicher Mengen Hilfsstoffe, mögliche Hydrolyse der Dihalogenaromaten durch wasserhaltige Reaktionsmischungen, Korrosion usw. Dies kann im Polymer zu niedrigem Molekulargewicht und mangelnder Qualität führen.

Aus den EP-A 126 369, EP-A 171 021, EP-A 215 259 sind vereinfachte Verfahren ohne Anwendung von Druck bekannt. Dies sind mehrstufige Verfahren (EP-A 126 369, EP-A 215 259), wobei die Dosierung korrosiver Medien mit entsprechenden Vorlagekesseln und Dosiereinrichtungen (z.B. EP-A 142 024, EP-A 171 021, EP-A 215 259) technisch aufwendig sein kann. Alle Verfahren benötigen die Herstellung des Rohstoffes Natriumsulfid in einer vorgelagerten Reaktion.

Aus der EP-A 109 637 sind Eintopfreaktionen (Verfahrensdurchführung in einem Kessel) zur Herstellung von Polyarylensulfiden mit vergleichsweise geringem technischen Aufwand bekannt, die jedoch keine Dosierverfahren sind (Sicherheitsaspekt).

Ziel der Erfindung ist es somit, ein verbessertes, technisch vereinfachtes Verfahren zur Herstellung von Polyarylensulfiden, vorzugsweise Polyphenylensulfid bereitzustellen. Das erfindungsgemäße Verfahren weist gegenüber den bekannten Vorteile auf, z.B. fehlende Einrichtungen zur Herstellung der schwefelhaltigen Reaktionskomponente, weitgehende Vermeidung der Bildung von Nebenprodukten, z.B. durch Vermeidung der Hydrolyse der Dihalogenaromaten durch Verkürzung der Kontaktzeiten mit der wasserhaltigen Schwefelkomponente, verbesserte Raum/Zeit-Ausbeute, verringerten Energieverbrauch durch Nutzung der Neutralisationswärme von $H_2S$ und Alkalihydroxid, Verzicht auf Hilfsstoffe, verbesserte Produktqualität, geringere Belastung der Kreisläufe zur Rückgewinnung von Löse- und Waschflüssigekeiten. Das erfindungsgemäße Verfahren ist ein Dosierverfahren (Sicherheitsaspekt). Ein weiterer Vorteil ist die damit verbundene Verbesserung der Qualität der erfindungsgemäß erhaltenen Polyarylensulfide. Die so produzierten Polymere zeigen einen geringeren Gehalt an reaktiven Endgruppen, eine hellere Farbe und einen geringeren Gehalt an anorganischen Salzen.

Gegenstand der Erfindung ist ein Verfahren zur Herstellung von Polyarylensulfiden, vorzugsweise Polyphenylensulfid aus

a) gleichen oder verschiedenen Dihalogen-(hetero)aromaten, vorzugsweise Dihalogenaromaten, der Formeln (I), (II) und/oder (III)

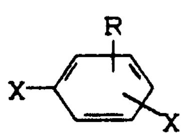

(I),

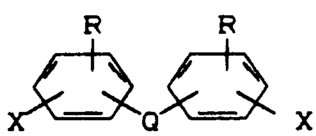

(II),

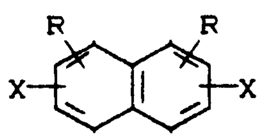

(III),

in denen

X Halogen wie Chlor oder Brom bedeutet,

R gleich oder verschieden ist und Wasserstoff, $C_1$-$C_4$-Alkyl, $C_5$-$C_{10}$-Cycloalkyl, $C_6$-$C_{10}$-Aryl, $C_7$-$C_{14}$-Alkylaryl, $C_7$-$C_{14}$-Arylakyl sein kann, wobei zwei zueinander orthoständige Reste R unter Einbeziehung der benachbarten C-Atome im Ring zu einem $C_5$-$C_{14}$-aromatischen oder bis zu drei Heteroatome wie N, O, S enthaltenden heterocyclischen Ring verknüpft sein können, und

Q für eine Einfachbindung oder eine Gruppe wie $-CR_2-$, -Ar-, -O-, -S-, -NR-, -C(O)-, -C(O)-Ar-C(O)-, -C(O)-NR-C(O)- steht, wobei R die obengenannte Bedeutung hat und Ar für einen $C_6$-$C_{24}$-Aromaten oder Heteroaromaten steht, und

wobei gegebenenfalls bis zu 20 Mol-% des Dihalogenaromaten durch $C_1$-$C_{36}$-Dihalogenaliphaten ersetzt sein können und/oder $C_8$-$C_{36}$-Aromaten, die mindestens zwei aliphatisch gebundene Halogene wie Chlor oder Brom enthalten und

b) gegebenenfalls 0,05 bis 3 Mol-%, bezogen auf die Summe aus a) Tri- oder Tetrahalogenaromaten der Formel (IV)

$ArX_n$ (IV),

in der

X für Halogen wie Chlor oder Brom steht,

Ar für einen $C_6$-$C_{24}$-Aromaten oder Heteroaromaten, bei dem bis zu 3 C-Atome durch Heteroatome wie N, O, S ersetzt sein können, steht und

n für die Zahl 3 oder 4 steht,

und/oder

gegebenenfalls 0,05 bis 7,5 Mol-% bezogen auf die Summe aus a) Verbindungen zur Regelung des Molekulargewichts, vorzugsweise Monohalogen- und/oder Monohydroxyaromaten,

c) Alkalihydroxid, bevorzugt wässriges oder wasserfreies Natrium- oder Kaliumhydroxid oder deren wässrige oder wasserfreien Mischungen

und

d) Schwefelwasserstoff

in

e) einem polaren, aprotischen organischen Lösungsmittel,

dadurch gekennzeichnet, daß

i) der Dihalogenaromat unter a) und die Zuschlagstoffe unter b) und das polare, aprotische organische Lösungsmittel unter e) in einem Reaktionskessel vorgelegt werden und bei leicht erniedrigtem Druck von 0,5 bar bzw. leicht erhöhtem Druck bis 6 bar zum Sieden erhitzt werden,

ii) anschließend eine ausreichende Menge, mindestens die Menge physikalischer Löslichkeit, an $H_2S$ unter leicht vermindertem (0,5 bar) bis leicht erhöhtem (10 bar) Druck auf den Reaktionskessel aufgedrückt wird,

iii) anschließend die ca. 1,5 bis 2,2 fache molare Menge, bezogen auf die Summe der Komponenten (a + b), an Alkalihydroxid nach c), bevorzugt NaOH oder KOH, als wässrige oder wasserfreie Schmelze vorgelegt und in möglichst feinverteilter Form in die Reaktionsmischung eingetragen und Wasser azeotrop abdestilliert wird,

iv) gleichzeitig zu iii) in oder über die Reaktionslösung Schwefelwasserstoff nachgeliefert wird,

v) nach Ende der Dosierung die Lösung auf 180 -250 °C aufgeheizt und der Molgewichtsaufbau vollzogen wird.

Die Umsetzung wird nach der Alkalihydroxid- Dosierung unter Inertgas (z.B. $N_2$) durchgeführt.

Die Reaktionszeit kann innerhalb einer weiten Spanne variiert werden. Sie kann von weniger als 1 Stunde bis 30 Stunden, bevorzugt 2 bis 12 Stunden, betragen. Nicht umgesetzter Schwefelwasserstoff kann nach der Alkalihydroxid-Dosierung über Kopf entweichen und z.B. recyclisiert werden. Nicht umgesetzte Halogenaromaten können am Ende der Reaktion aus dem Reaktionsgemisch - beispielsweise destillativ - abgetrennt werden.

In einer besonderen Ausführungsform der Erfindung können auch Mehrkesselkaskaden bis hin zu einer kontinuierlichen Reaktionsführung verwendet werden. Es ist vorteilhaft, Apparaturen zu verwenden, bei denen alle Teile, die mit der Reaktionsmischung in Berührung kommen, aus korrosionsbeständigen Materialien bestehen bzw. damit beschichtet sind, z.B. Titan, Zirkon, Glas, bestimmte Edelstähle und unter den Reaktionsbedingungen beständige Kunststoffe.

Die Isolierung der Polyarylensulfide erfolgt in bekannter Weise (z.B. EP-A 374 462).

Beispiele für erfindungsgemäß verwendbare Dihalogenaromaten der Formeln I-III sind z.B. in der EP-A 374 462 genannt.

In einer bestimmten Ausführungsform der Erfindungsform der Erfindung können Dihalogenaromaten ganz oder teilweise durch lineare, verzweigte oder cyclische (ab $C_5$) $C_1$-$C_{36}$-Dihalogenaliphaten, die Cl, Br enthalten wie 1,2-Dichlorethan, 1,3-Dichlorpropan, 1,3-Dichlorbutan, 2,3-Dichlorbutan, 1,4-Dichlorbutan, 1,2-Dichlor-2-methylpropan, 1,3-Dichlor-2,2-dimethylpropan, 1,5-Dichlorpentan, 1,6-Dichlorhexan-1,7-Dichlorheptan, 1,8-Dichloroctan, 1,9-Dichlornonan, 1,10-Dichlordecan, 1,11-Dichlorundecan, 1,12-Dichlordodecan, höhere Dichlorparaffine, 1,2-Dichlorcyclohexan, 1,3-Dichlorcyclohexan, 1,4-Dichlorcyclohexan etc. oder durch $C_8$-$C_{36}$-Aromaten, die mindestens zwei aliphatisch gebundene Halogene wie Cl, Br enthalten, wie o-Xylylendichlorid, m-Xylylendichlorid, p-Xyloylendichlorid, 1,3-Bis(chlormethyl9-4,6-dimethylbenzol etc. ersetzt werden.

Beispiele für erfindungsgemäß einsetzbare Verzweiger der Formel (IV) sind 1,2,4-Trichlorbenzol, 1,3,5-Trichlorbenzol, 1,3,5-Tribrombenzol, 1,3,5-Tris(4-chlorphenyl)benzol, 1,3,5-Tris(4-bromphenyl)benzol, 2,2',4,4'-Tetrachlordiphenyl, 2,2'4,4'-Tetrachlordiphenylsulfid.

Beispiele für erfindungsgemäß einsetzbare Verbindungen zur Regelung des Molekulargewichts sind Phenol, Thiophenol, deren Alkalisalze (Li, Na, K), Brombenzol, 4-Chlordiphenyl, 4-Chlordiphenylsulfon, 4-Chlordiphenylsulfid, 1-Chlornaphthalin, 2-Chlornaphthalin, 4-Bromdiphenyl.

Beispiele für erfindungsgemäß einsetzbare Lösungsmittel sind z.B. in der EP-A 374 462 erwähnt. Der Normalsiedepunkt sollte zwischen 200 ° C und 280 ° C liegen. Zur Erreichung der genannten Temperaturen kann die Reaktion unter leichtem Überdruck durchgeführt werden.

Als Cosolventien können beispielsweise N,N-Dialkylcarbonsäureamide von $C_1$-$C_8$-aliphatischen und $C_6$-$C_{12}$-aromatischen Carbonsäuren in einer Menge von 0,02 bis 1,0 Mol, bezogen auf 1 Mol Schwefelwasserstoff, eingesetzt werden, z.B. N,N-Dimethylacetamid, N,N-Diethylacetamid, N,N-Dimethylpropionamid.

Die erfindungsgemäßen Polymeren haben Molekulargewichte $M_n$ von ca. 1000 bis 100.000. Die Bestimmung der Molekulargewichte erfolgt beispielsweise über eine chromatographische Methode oder über Schmelzviskositätsmessungen (s.z.B. EP-A 171 021).

Die erfindungsgemäß hergestellten Polyarylensulfide können gegebenenfalls in Mischung mit üblichen Füll-, Verstärkungs- und Hilfsstoffen und/oder Polymeren zur Herstellung geformter Körper verwendet werden.

Geformte Körper sind z.B. Extrudate wie Fasern, Folien, Platten, Rohre, Profile etc., spritzgegossene Formteile oder Verbundwerkteile.

Die erfindungsgemäß hergestellten Polyarylensulfide können gegebenenfalls mit üblichen Füll- und Verstärkungsstoffen (z.B. Modern Plastics Encyclopedia 1988, Vol, 64, No. 10A, S. 183-194), üblichen Hilfsmitteln (loc. cit., S.127-178) in üblichen Mengen abgemischt werden.

Die geformten Körper können weiterhin gegebenenfalls andere Polymere wie (Co)-Polyarylensulife, Polykondensate, Polyaddate, Polymerisate etc. enthalten.

Die erfindungsgemäß hergestellten Polyarylensulfide können als geformte Körper in üblicher Weise Verwendung finden, z.B. als Automobilteile, Armaturen, Ventile, Kugellagerteile, Elektroteile wie z.B: Schalter, elektronische Tafeln, chemikalienresistente und bewitterrungsstabile Teile und Apparate wie Pumpengehäuse und Pumpenflügelräder, Ätzbadschalen, Dichtungsringe, Teile von Büromaschinen, Fernmeldeeinrichtungen sowie Haushaltsgeräten.

## Beispiele

### Beispiel 1

In einem mit Stickstoff inertisierten 10 l Rührbehälter werden vorgelegt:

4860 g N-Methylcaprolactam
2205 g p-Dichlorbenzol

und unter weiterer $N_2$-Überleitung bei Normaldruck zum Sieden erhitzt.

In einer beheitzten Vorlage werden vorgelegt:

1188 g Natriumhydroxid
509 g Wasser

Die Stoffe werden gut durchgemischt. Sobald der Rührbehälter mindestens 210 ° C erreicht hat, wird mit der Einleitung von $H_2S$-Gas (180 - 190 g/h) begonnen. Nach Beginn der $H_2S$-Gas-Einleitung wird der Inhalt der Vorlage innerhalb von 3 h zudosiert. Die Temperatur der Reaktionslösung im Rührbehälter beträgt dann ca. 212 ° C. Der Brüdenstrom aus dem Rührbehälter wird über eine Kolonne geführt, kondensiert und dann in ein Trenngefäß geführt. Das abgeschiedene Wasser wird aus dem Trenngefäß entnommen und so aus dem Prozeß entfernt, das p-Dichlorbenzol in die Kolonne zurückgeführt. Überschüssiges $H_2S$ entweicht über den Kondensator.

Nach Ende der NaOH-Dosierung läuft die $H_2S$-Einleitung 1 h weiter. Danach wird statt $H_2S$ Stickstoff eingeleitet.

Der Rührbehälter wird dann auf 230 ° C erhitzt unter Fortführung der Polykondensationsreaktion.

Nach Ablauf der Reaktionszeit wird die Reaktionsmischung kristallisiert und wie in EP-A 374 462 beschrieben aufgearbeitet.

Analyse des erhaltenen Polyphenylensulfids:

| | |
|---|---|
| Viskosität | 301.0 Pa.s (nach Platte-Kegel-Methode gem. EP-A 171 021) |
| Ausbeute | 92.0 % (bezogen auf p-Dichlorbenzol) |
| Chlor anorg. | <5.0 ppm |
| $H_2S$-Aufnahme | 98.8 % der Theorie |

Vergleichbeispiel 1

Zur Demonstration der Überlegenheit des vorgeschlagenen Verfahrens.

In der in Beispiel 1 genannten Apparatur wurde als Schwefelquelle Natriumsulfid und Natriumhydrogensulfid im Molverhältnis 2:1 eindosiert. Die Weiterreaktion und Aufarbeitung erfolgte wie in Beispiel 1.

| Ergebnis: | Beispiel 1 | Vergleichsbeispiel 1 |
|---|---|---|
| Viskosität in Pa.s | 301 | 95,0 |
| Ausbeute in % | 92 | 91,5 |
| PPS-Farbe[1)] | 8 | 200,0 |
| Farbe der abgesaugten Mutterlauge | hell | dunkel |

[1)]als 10%ige Lösung in N-Methylcarprolactam bei 20 °C im Vergleich mit einer Standard-Jodlösung

Vergleichsbeispiel 2

In der im Beispiel 1 genannten Apparatur wurde als Schwefelquelle frisch aus $H_2S$ und NaOH hergestelltes NaHS/$Na_2S$-Gemisch, was außerhalb des Reaktors hergestellt wurde, im Molverhältnis 2:1 in den Reaktorsumpf eindosiert. Die Weiterreaktion und Aufarbeitung erfolgte wie in Beispiel 1.

| Ergebnis: | Beispiel 1 | Vergleichsbeispiel 2 |
|---|---|---|
| SH-Endgruppen in % | 0,2 | 0,3 |
| Viskosität in Pa.s | 301 | 180 |
| anorg. Chlor in ppm | < 5 | 8 |
| PPS-Farbe[1)] | 8 | 30 |
| Farbe der Mutterlauge | hell | dunkel |

[1)]als 10%ige Lösung in N-Methylcarprolactam bei 20 °C im Vergleich mit einer Standard-Jodlösung

**Patentansprüche**

**1.** Verfahren zur Herstellung von Polyarylensulfiden

a) aus gleichem oder verschiedenen Dihalogen(hetero)aromaten, der Formel (I), (II) und/oder (III)

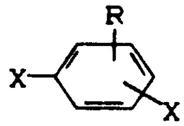

(I),

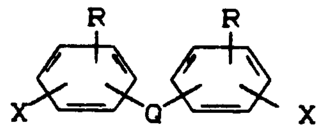

(II),

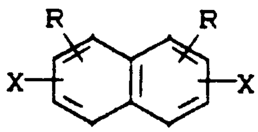

(III),

in denen

X Halogen wie Chlor oder Brom bedeutet,

R gleich oder verschieden ist und Wasserstoff, $C_1$-$C_4$-Alkyl, $C_5$-$C_{10}$-Cycloalkyl, $C_6$-$C_{10}$-Aryl,- $C_7$-$C_{14}$-Alkylaryl, $C_7$-$C_{14}$-Arylalkyl sein kann, wobei zwei zueinander orthoständige Reste R unter Einbeziehung der benachbarten C-Atome im Ring zu einem $C_5$-$C_{14}$-aromatischen oder bis zu drei Heteroatome wie N,O,S enthaltenden heterocyclischen Ring verknüpft sein können, und

Q für eine Einfachbindung oder eine Gruppe wie $-CR_2-$, -Ar-, -O-, -S-, -NR-, -C(O)-, -C(O)-Ar-C(O)-, -C(O)-NR-C(O)- steht, wobei R die obengenannte Bedeutung hat und Ar für einen $C_6$-$C_{24}$-Aromaten oder Heteroaromaten steht, und

wobei gegebenfalls bis zu 20 Mol-% des Dihalogenaromaten durch $C_1$-$C_{36}$-Dihalogenaliphaten ersetzt sein können und/oder $C_8$-$C_{36}$-Aromaten, die mindestens zwei aliphatisch gebundene Halogene enthalten und

b) gegebenenfalls 0,05 bis 3 Mol-%, bezogen auf die Summe aus a) Tri- oder Tetrahalogenaromaten der Formel (IV)

$ArX_n$ (IV),

in der

X für Halogen wie Chlor oder Brom steht,

Ar für einen $C_6$-$C_{24}$-Aromaten oder Heteroaromaten, bei dem bis zu 3 C-Atome durch Heteroatome wie N, O, S ersetzt sein können, steht und

n für die Zahl 3 oder 4 steht,

und/oder

gegebenenfalls 0,05 bis 7,5 Mol-% bezogen auf die Summe aus a) Verbindungen zur Reglung des Molekulargewichts, vorzugsweise Monohalogen- und/oder Monohydroxyaromaten,

und

c) Alkalihydroxid, bevorzugt wäßriges oder wasserfreies Natrium- oder Kaliumhydroxid oder deren wäßrige oder wasserfreien Mischungen

und

d) Schwefelwasserstoff

in

e) einem polaren, aprotischen organischen Lösungsmittel,

dadurch gekennzeichnet, daß

i) der Dihalogenaromat unter a) bzw. Zuschlagstoffe unter b) und das polar, aprotische organische Lösungsmittel unter e) in einem Reaktionskessel vorgelegt werden und bei leicht erniedrigtem Druck von 0,5 bar bzw. leicht erhöhtem Druck bis 6 bar zum Sieden erhitzt werden,

ii) anschließend eine ausreichende Menge, mindestens die Menge physikalischer Löslichkeit, an $H_2S$ unter leicht vermindertem (0,5 bar) bis leicht erhöhtem (10 bar) Druck auf den Reaktionskessel aufgedrückt wird,

iii) anschließend die ca. 1,5 bis 2,2 fache molare Menge, bezogen auf die Summe der Komponenten (a + b), an Alkalihydroxid nach c), als wäßrige oder wasserfreie Schmelze vorgelegt und in möglichst feinverteilter Form in die Reaktionsmischung eingetragen und Wasser azeotrop abdestilliert wird,
iv) gleichzeitig zu iii) in oder über die Reaktionslösung Schwefelwasserstoff nachgeliefert wird,
v) nach Ende der Dosierung die Lösung auf 180 - 250 °C aufgeheizt und der Molgewichtsaufbau vollzogen wird.

**2.** Verfahren gemäß Anspruch 1, dadurch gekennzeichnet, daß das Alkalihydroxid Natriumhydroxid ist und mit 0 bis 60 Gew.-% Wasser gemischt sein kann und daß es fein verteilt eingetragen wird.

**3.** Verfahren gemäß Anspruch 1, dadurch gekennzeichnet, daß der Dihalogenaromat der Formel (I) p-Dichlorbenzol ist.

**4.** Verfahren gemäß Anspruch 1. dadurch gekennzeichnet, daß der Schwefelwasserstoff in die Reaktionslösung eingeleitet wird.

**5.** Verfahren gemäß Anspruch 1, dadurch gekennzeichnet, daß eine Kaskade von verbundenen Reaktionsbehältern benutzt wird und daß das Verfahren kontinuierlich betrieben wird.